# EUROPÄISCHE PATENTSCHRIFT

(11) **EP 1 284 209 B1**
(45) Veröffentlichungstag und Bekanntmachung des Hinweises auf die Patenterteilung: **12.09.2012**
(21) Anmeldenummer: 02016177.4
(22) Anmeldetag: 20.07.2002
(51) Int. Cl.: B60J 7/14

(54) **Cabriolet-Fahrzeug**
Convertible vehicle
Véhicule convertible

(30) Priorität: 17.08.2001 DE 10139354
(43) Veröffentlichungstag der Anmeldung: 19.02.2003
(73) Patentinhaber: Wilhelm Karmann GmbH, 49084 Osnabrück (DE); Specialty Vehicle Acquisition Corp., Los Angeles, CA 90067 (US)
(72) Erfinder: Quindt, Reinhard, 20209 Farmington Hills, 48335 Michigan (US)
(74) Vertreter: Kronthaler, Wolfgang N.K.

(56) Entgegenhaltungen:
- WO-A-01/40007
- DE-A- 3 639 377
- US-A- 5 056 857
- US-A- 5 979 970

## Beschreibung

Die Erfindung betrifft ein Cabriolet-Fahrzeug nach dem Oberbegriff des Anspruchs 1.

Aus der DE 199 30 616 C1 ist bekannt, ein Cabriolet-Fahrzeug, das ein zweiteiliges Festdach aufweist, derart auszubilden, daß die Dachteile ineinander geschachtelt abgelegt werden können. Das hintere Dachteil, welches die Heckscheibe umfaßt, ist dabei auf einer Kreisbahn schwenkbar und wird in einer gegenüber seiner aufrechten Stellung um etwa 90° um eine Fahrzeugquerachse eingeschwenkten Stellung abgelegt. Der Schwenkbewegung nachgeordnet ist ein Abwärtsverfahren des hinteren Dachteils mit dem parallel dazu liegenden vorderen Dachteil entlang einer Führungskulisse, die jeweils einer Karosserieaußenseite zugeordnet ist. Ein derartiger Ablagemechanismus benötigt einen erheblichen Raum in Fahrzeuglängsrichtung. Dadurch sind die Gestaltungsmöglichkeiten im Fahrzeug eingeengt.

Zudem ist es für das Ineinanderschachteln des hinteren Dachteils und des diesem vorgeordneten Dachteils erforderlich, daß ein zweites Antriebsorgan für die Betätigung eines die beiden Dachteile verbindenden Gelenks und ein drittes Antriebsorgan für ein Abgleiten des vorderen Dachteils an einer Gleitschiene des hinteren Dachteils vorgesehen werden. Die unterschiedlichen Bewegungsphasen müssen dann nacheinander ablaufen. Der Steuerungsaufwand ist beträchtlich, ebenso der Montageaufwand für die mehreren vorgesehenen Antriebsorgane.

Weitere Cabriolet-Fahrzeuge mit einem großen Raumbedarf des Daches sind aus der WO 01/40007A, US 5 056 857 A, DE 36 39 377 A, EP 1 284 210 A2 und EP 1 285 795 A2 bekannt.

Der Erfindung liegt das Problem zugrunde, ein Cabriolet-Fahrzeug der genannten Art hinsichtlich des Raumbedarfs des abgelegten Daches und des bewegten Daches sowie hinsichtlich der Einfachheit der Öffnungs- und Schließbewegung zu optimieren.

Die Erfindung löst dieses Problem durch ein Cabriolet-Fahrzeug mit den Merkmalen des Anspruchs 1. Hinsichtlich vorteilhafter Ausgestaltungen wird auf die abhängigen Ansprüche verwiesen.

Bei Ausbildung jeweils nur eines einzigen Antriebsorgans pro Fahrzeugseite, das sowohl auf das hintere als auch auf das diesem vorgeordnete Dachteil einwirkt, ist der Steuerungsaufwand erheblich verringert. Allein durch Betätigung des jeweils gemeinsamen Antriebsorgans kann die Öffnungs- oder Schließbewegung des Daches ohne weitere Steuerungselemente in einem durchgehenden Bewegungsablauf durchgeführt werden.

Eine besonders raumsparende Ablagemöglichkeit des Daches ergibt sich mit der Ausbildung einer Gelenkkette, mittels deren das hintere Dachteil allein durch Gegeneinanderverschwenken der in der Gelenkkette miteinander verbundenen Lenker bewegt werden kann.

Die Gesamtbewegung des hinteren Dachteils ist somit eine Überlagerung einzelner Schwenkbewegungen, wobei ein translatorischer Anteil außerhalb des Antriebselements nicht enthalten zu sein braucht. Besonders vorteilhaft ist die Ausbildung einer Gelenkkette gemäß Anspruch 1 mit der Ausbildung lediglich eines Antriebsorgans gemäß Anspruch 1. Über die Gelenkkette kann das Antriebsorgan die gesamte Schwenkbewegung in einzelne Schwenkbewegungen der einzelnen Lenker aufspalten und somit, aufgespalten in Teilbewegungen, einen fließenden Bewegungsablauf der Dachöffnungs- oder -schließbewegung bewirken.

Wenn die Verbindung zwischen dem hinteren und dem diesen vorgeordneten Dachteil über eine Gelenkkette ausgebildet ist, kann eine reine Schwenkbewegung auch zur Ablage des vorgeordneten Dachteils dienen. Es ist weiterhin vorteilhaft, die beiden Gelenkketten miteinander zu einem gemeinsamen Vielgelenk zu verbinden, um eine gekoppelte Bewegung des hinteren und des vorgeordneten Dachteils allein über die Gelenkkette zu ermöglichen, ohne weiterer Steuerungsmittel o. dgl. zu bedürfen.

Durch entsprechende Dimensionierung der jeweiligen Lenker in dem Vielgelenk kann eine Ablage des hinteren Dachteils erreicht werden, bei der dieses nur geringfügig verschwenkt und seine nahezu aufrechte Stellung, in der es bei geschlossenem Dach gehalten ist und in der es eine geringe Erstreckung längs zur Fahrtrichtung aufweist, auch im abgelegten Zustand beibehalten werden kann.

Mit der Erfindung können auch sehr kurze Ablageräume genutzt werden, so daß beispielsweise auch ein Pick-Up-Fahrzeug als Cabriolet ausgebildet werden kann und dabei die Dachteile in dem engen Raum vor dem vorderen Ende eines offenen Laderaums gelegt werden können.

Weitere Vorteile und Merkmale der Erindung ergeben sich aus einem nachfolgend beschriebenen und der Zeichnung dargestellten Ausführungsbeispiel des Gegenstandes der Erfindung. In der Zeichnung zeigt:

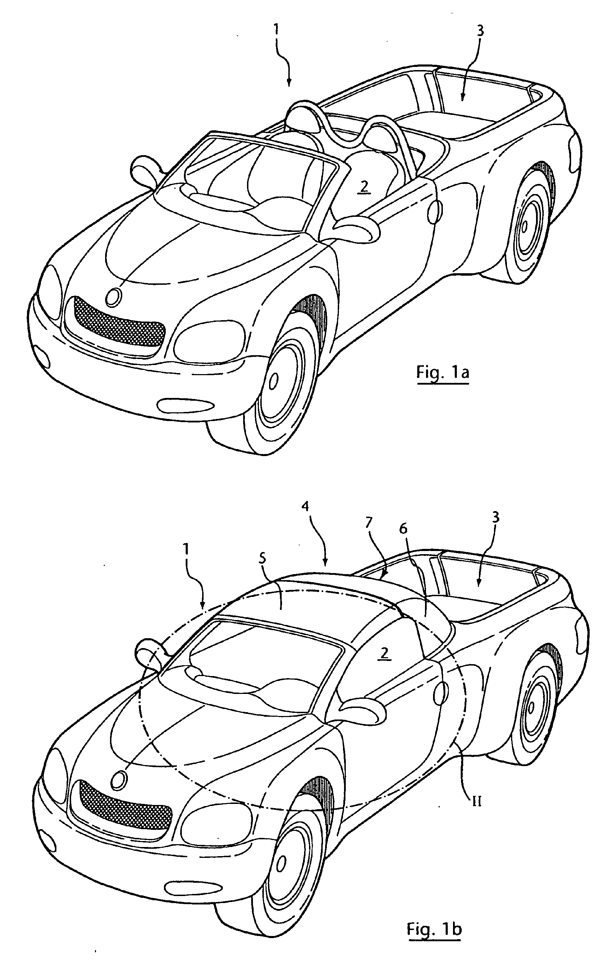

- Fig. 1a: ein erfindungsgemäßes Cabriolet-Fahrzeug, das als Pick-UpFahrzeug ausgebildet ist, in perspektivischer Vorderansicht, in geöffnetem Zustand des Daches,
- Fig. 1 b:: das Fahrzeug nach Fig. 1 in geschlossenem Zustand des Daches,
- Fig. 2:: einen Ausschnitt, der im wesentlichen dem Bereich II in Fig. 1 entspricht, bei geschlossenem Dach,
- Fig. 3:: eine perspektivische Ansicht von schräg links hinten auf den Dachbereich des Fahrzeugs nach Fig. 2,
- Fig. 4:: eine Ansicht aus Richtung IV in Fig. 3 auf das Dach und seinen Antriebsmechanismus in der geschlossenen Stellung nach Fig. 2,
- Fig. 5:: eine ähnliche Darstellung wie Fig. 2 bei geschlossenem Dach, jedoch mit bereits geöffnetem Verdeckkastendeckel,
- Fig. 6:: eine ähnliche Ansicht wie Fig. 5 während der Öffnung des Daches, bei der die gezeigten zwei Dachteile sowohl relativ zueinander als auch relativ zur Fahrzeugkarosserie bewegt werden,

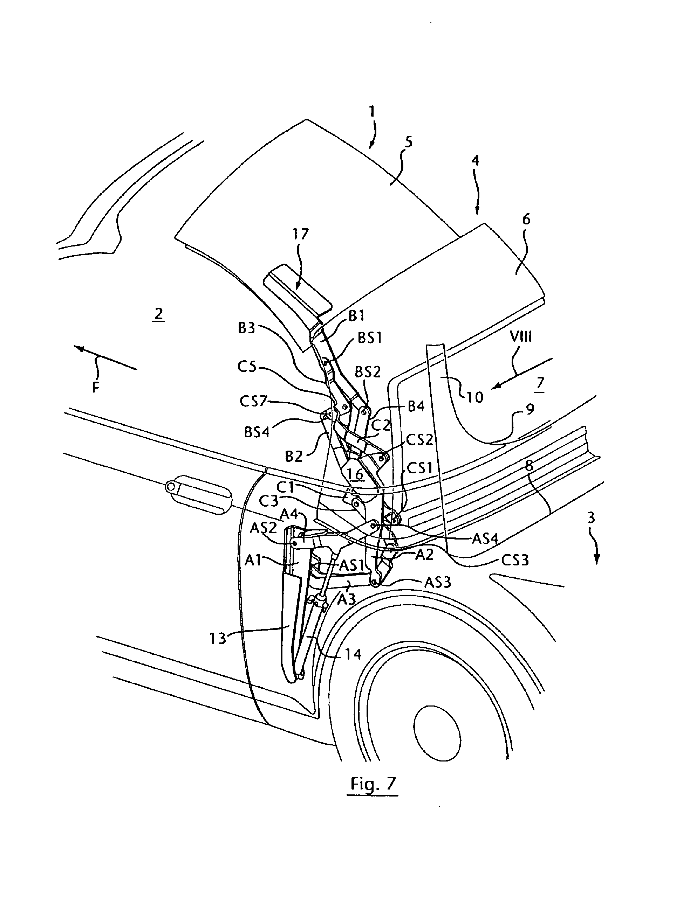

- Fig. 7:: eine perspektivische Ansicht von schräg links hinten des Fahrzeugs im Öffnungszustand des Daches etwa gemäß Fig. 6,

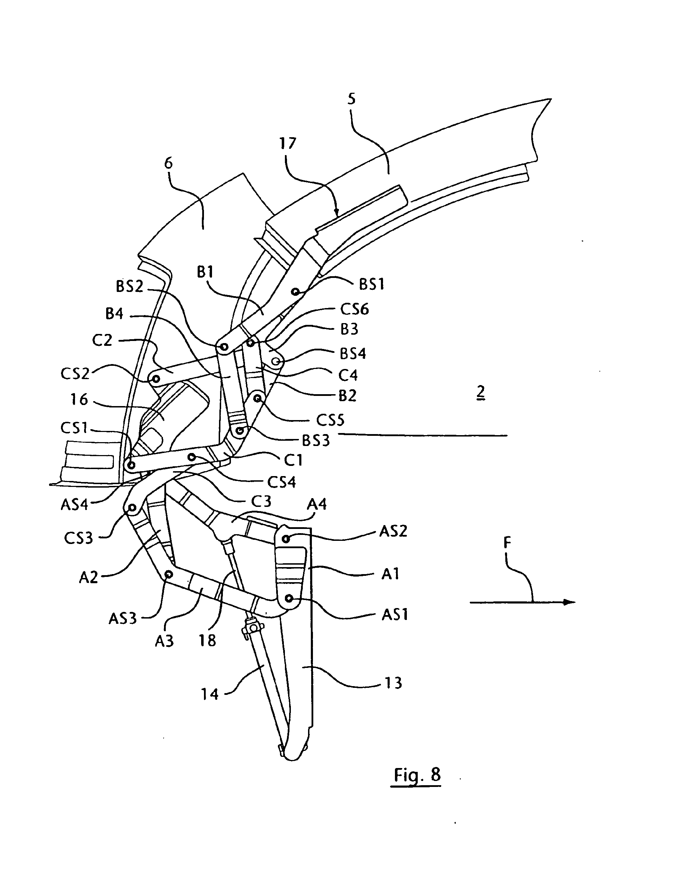

- Fig. 8:: eine Ansicht aus Richtung des Pfeils VIII in Fig. 7 auf das sich öffnende Dach,

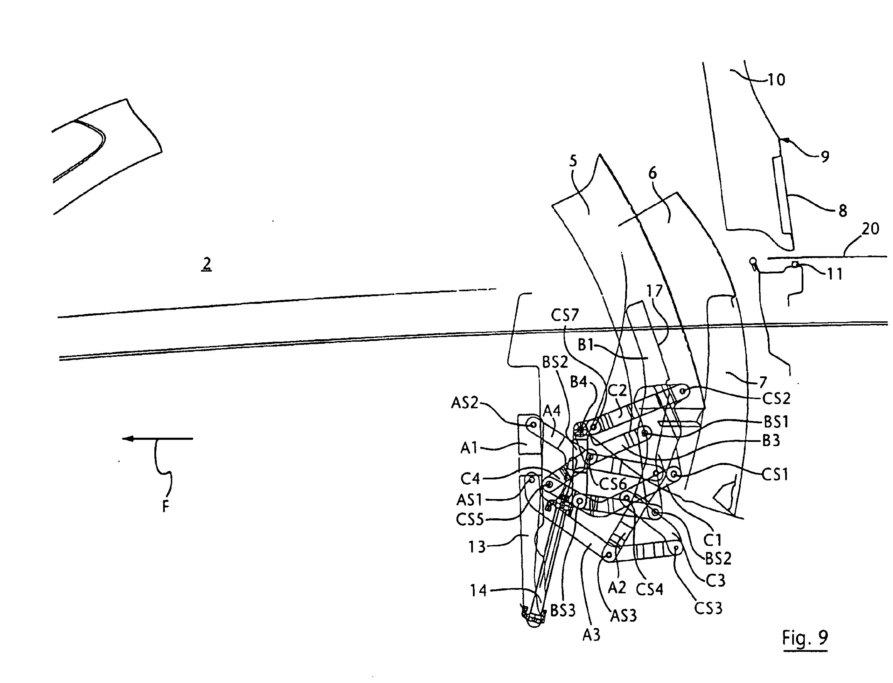

- Fig. 9:: eine ähnliche Ansicht wie Fig. 6 bei weiter fortschreitender Öffnung des Daches,

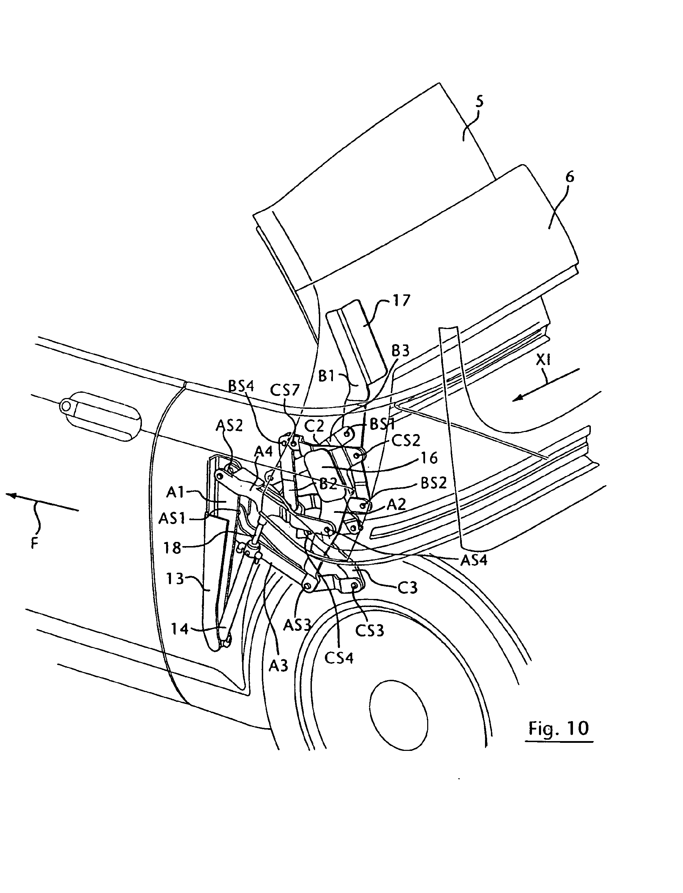

- Fig. 10:: eine perspektivische Ansicht von schräg links hinten auf das Fahrzeug im Öffnungszustand des Daches gemäß Fig. 9,

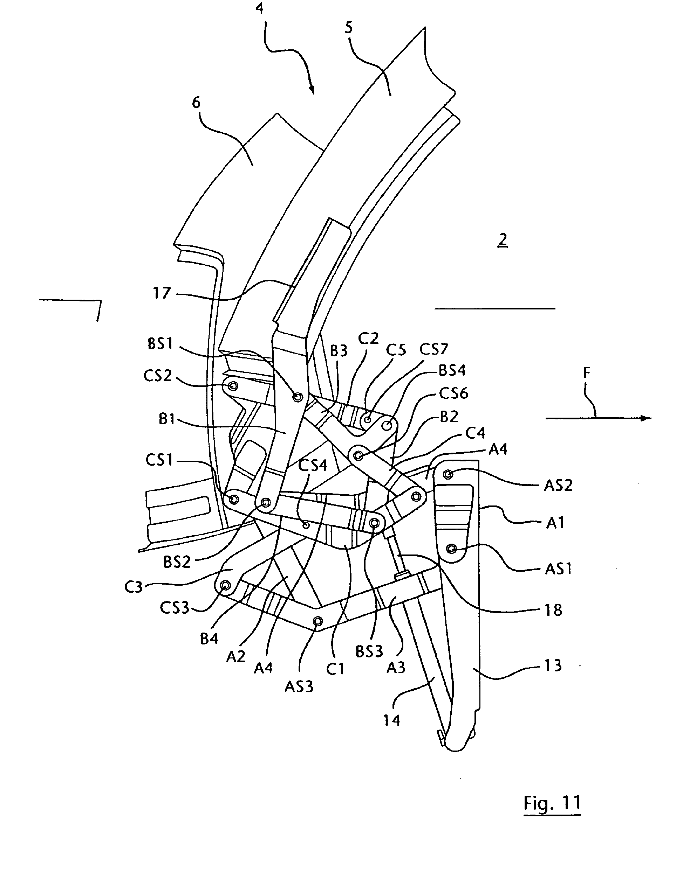

- Fig. 11:: eine Ansicht des Daches aus Richtung des Pfeils XI in Fig. 10,

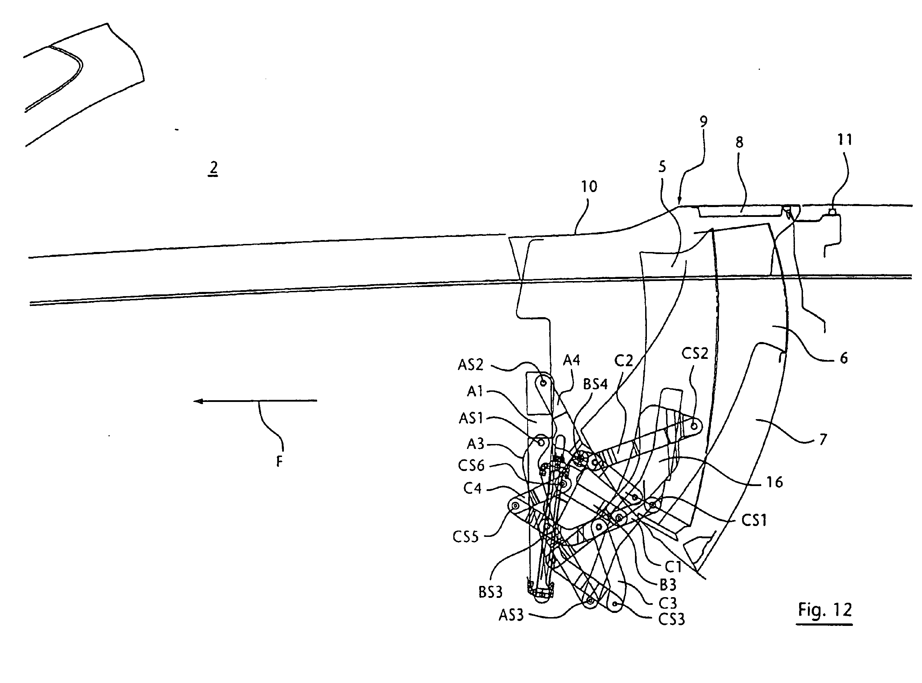

- Fig. 12:: eine ähnliche Ansicht wie Fig. 9 bei vollständig abgelegtem Dach,

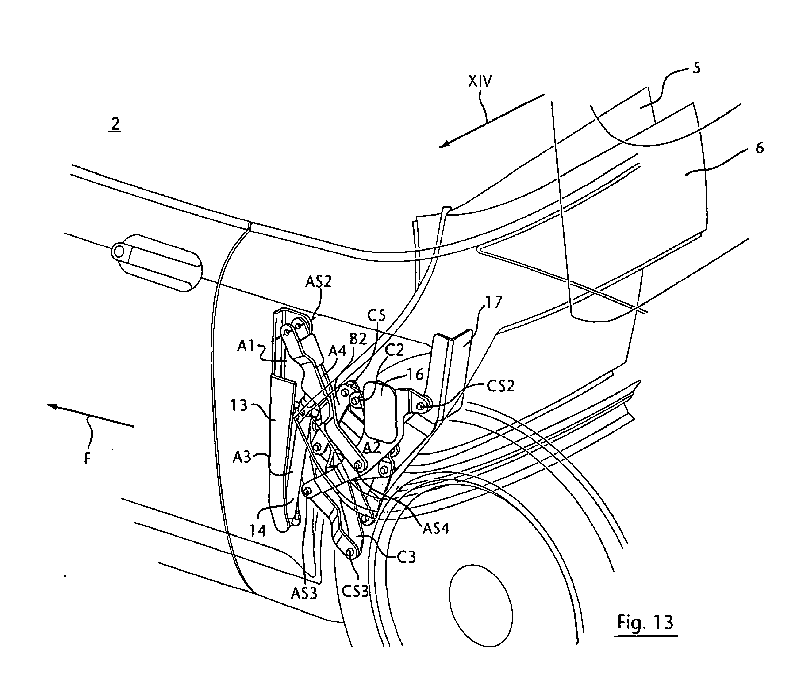

- Fig. 13:: eine perspektivische Ansicht auf den Dachbereich des Fahrzeugs in der vollständig geöffneten Stellung nach Fig. 12,

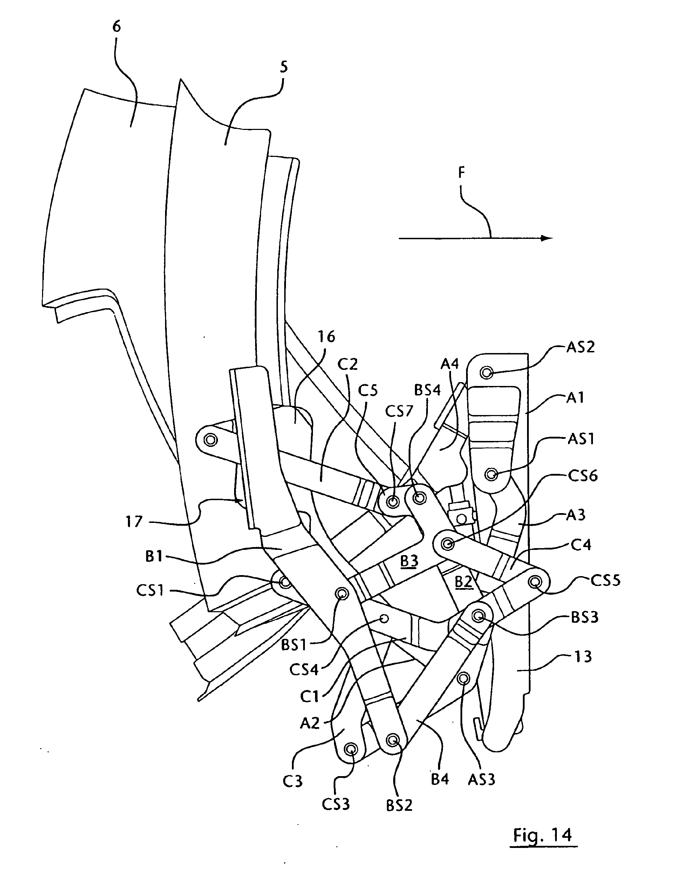

- Fig. 14:: eine Ansicht aus Richtung des Pfeils XIV in Fig. 13.

Das Cabriolet-Fahrzeug 1 gemäß Fig. 1 ist als sogenanntes Pick-Up-Fahrzeug ausgebildet, d.h., daß im vorderen Fahrzeugbereich eine Fahrerkabine 2 vorgesehen ist, die mit einer oder mehreren Sitzreihen ausgebildet sein kann. Im rückwärtigen Fahrzeugbereich findet sich eine offene Ladefläche 3.

Das Cabriolet-Fahrzeug 1 weist im Ausführungsbeispiel ein Dach 4 mit zwei festen Dachteilen 5, 6 auf. Das Dachteil 5 ist dabei dem hinteren Dachteil 6, das auch eine Heckscheibe umfaßt, in Fahrtrichtung F vorgeordnet. Anstelle der gezeigten zwei festen Dachteile 5, 6 kommt auch eine andere Anzahl in Betracht. Ebenso ist es nicht zwingend, daß eine Dachkonstruktion, wie hier gezeigt, bei einem Pick-Up-Fahrzeug eingesetzt wird.

Hinter dem geschlossenen Dach 4 ist gemäß dem gezeichneten Ausführungsbeispiel ein schwenkbarer Verdeckkastendeckel 8 vorgesehen, der mit seiner im mittleren Bereich vorderen Kante 9 an den rückwärtigen Bereich des hinteren Dachteils 6 anschließt und der bei geschlossenem Dach 4 geöffnet werden kann. Seitliche Schenkel 10 des Verdeckkastendeckels 8 erstrecken sich weiter nach vorne als die im mittleren Bereich liegende Vorderkante 9.

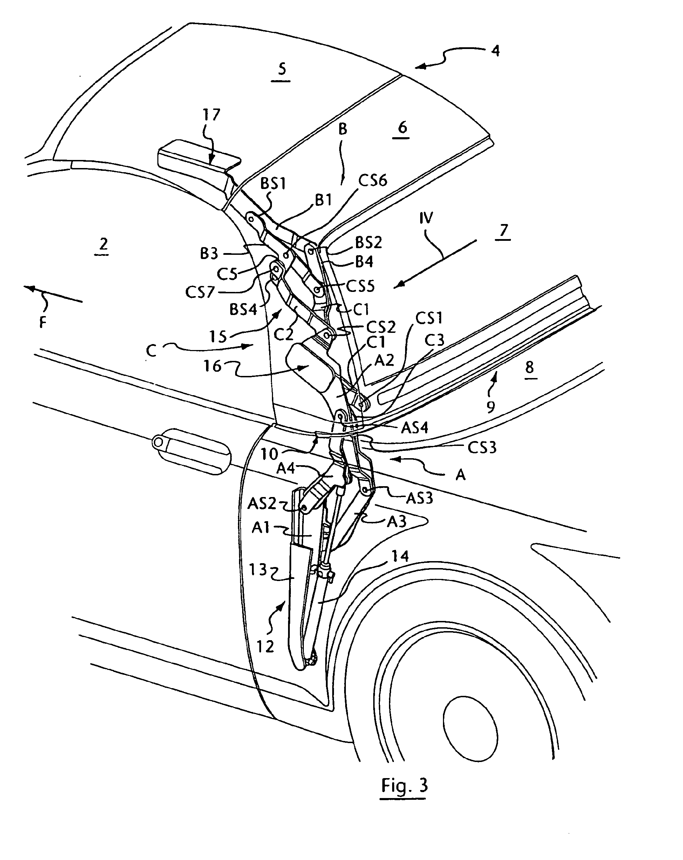

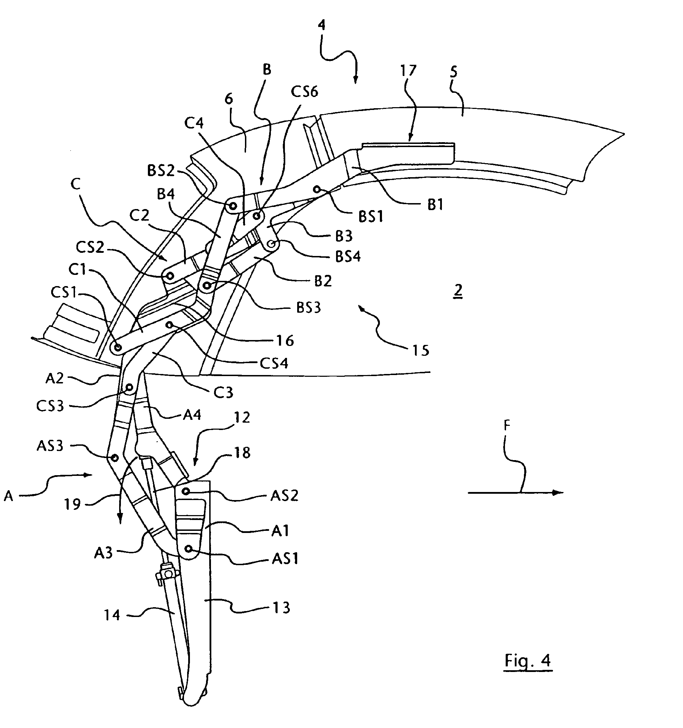

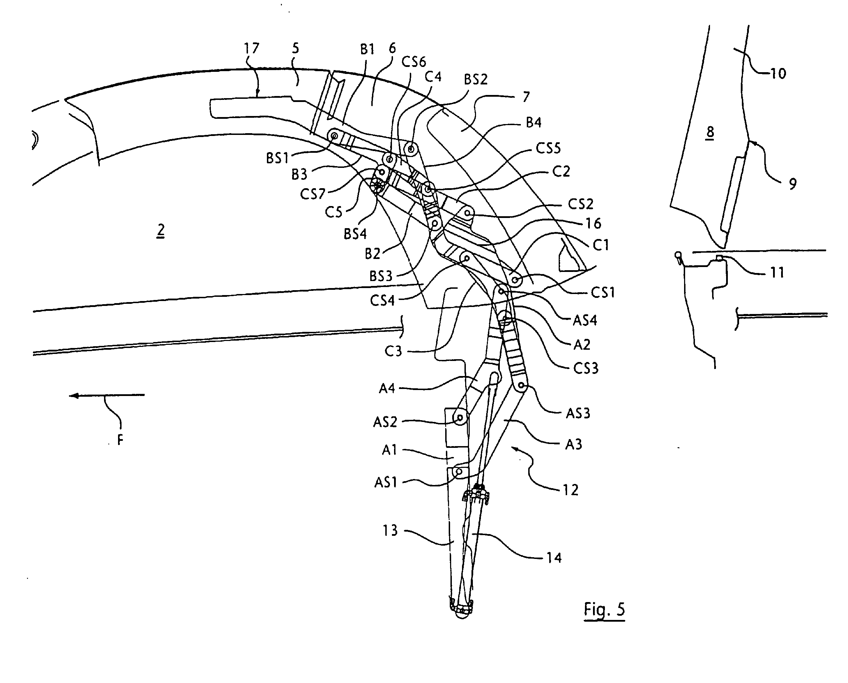

In geschlossener Stellung (Fig. 1 bis Fig. 6) des Daches 4 steht das hintere Dachteil 6 im wesentlichen aufrecht, wohingegen das vordere Dachteil 5 im wesentlichen horizontal gelegen ist und in Fahrtrichtung F das Dach 4 in Richtung des Windschutzscheibenrahmens fortsetzt.

Das Dach 4 ist insgesamt über ein karosseriefestes Hauptlager 12 beweglich gegenüber der Fahrzeugkarosserie gehalten. Hierfür umfaßt das Hauptlager 12 an jeder Fahrzeugseite einen karosseriefesten Lagerbock 13, an dem ein Antriebsorgan 14, hier als Hydraulikzylinder ausgebildet, gelagert ist.

Dabei ist jeweils genau ein Antrieb pro Fahrzeugseite vorgesehen, mittels dessen sowohl das hintere Dachteil 6 als auch das diesem vorgeordnete Dachteil 5 gemeinsam beweglich sind.

Hierfür steht der jeweilige Antrieb 14 über eine Gelenkkette 15 in Wirkverbindung mit dem hinteren Dachteil 6 sowie mit dem diesem vorgeordneten Dachteil 5. Für die Verbindung mit dem hinteren Dachteil 6 ist ein an der Gelenkkette 15 angeordneter Plattenkörper 16 vorgesehen, für die Verbindung mit dem vorgeordneten Dachteil 5 ein abgewinkelter Plattenkörper 17. Die Plattenkörper 16, 17 können beispielsweise mit den Dachteilen 6, 5 verschweißt, verklebt oder verschraubt sein. Auch andere Befestigungsmöglichkeiten kommen in Frage. Auch ist die Ausbildung von Plattenkörpern nicht zwingend. Ebenso sind andere Verbindungselemente mit den Dachteilen 5, 6 möglich.

Es ist nicht zwingend, daß beide Dachteile 5, 6 über eine gemeinsame Gelenkkette 15 in Wirkverbindung mit dem Antrieb 14 stehen. Statt dessen ist auch möglich, daß lediglich das hintere Dachteil 6 über gelenkig miteinander verbundene Lenker 15 in Wirkverbindung mit dem Antrieb 14 steht.

Im Ausführungsbeispiel koppelt die Gelenkkette 15 die Bewegungen der Dachteile 5 und 6, beide sind an dieser Gelenkkette 15 befestigt.

Die Gelenkkette 15 umfaßt im einzelnen ein unteres Viergelenk A, ein oberes Viergelenk B sowie ein Synchronisationsgestänge C, das die beiden Viergelenke A und B miteinander verbindet. Dabei ist nicht zwingend, daß die Mehrgelenke A und B jeweils als Viergelenke ausgebildet sind, wie es hier gezeigt ist. In jedem Fall handelt es sich aber um Mehrgelenke.

Das Viergelenk A, das das hintere Dachteil 6 mit dem Antrieb 14 verbindet, ist gebildet durch einen Teilbereich A1 des Lagerbocks 13 sowie einen gegenüberliegenden Lenker A2, der fest mit der Verbindungsplatte 16 zum hinteren Dachteil 6 verbunden oder mit diesem einstückig ausgebildet ist. Die Teile A1 und A2 sind durch Lenker A3 und A4 miteinander verbunden und bilden über die Schwenkachsen AS1, AS2, AS3 und AS4 insgesamt ein Gelenkparallelogramm aus.

Das obere Viergelenk B, das das vordere Dachteil 5 mit dem Synchronisationsgestänge C verbindet, ist gebildet durch einen ersten Lenker B1, der fest mit der abgewinkelten Verbindungsplatte 17 zum vorderen Dachteil 5 oder mit dieser einstückig ausgebildet ist. Diesem gegenüber liegt ein weiterer Lenker B2. Die Lenker B1 und B2 sind durch weitere Lenker B3 und B4 zu einem Viergelenk miteinander verbunden und bilden über die Schwenkachsen BS1, BS2, BS3 und BS4 insgesamt ein Gelenkparallelogramm aus.

Die Viergelenke A und B sind über ein Synchronisationsgestänge C miteinander verbunden, um dadurch die Krafteinleitung auf den Lenker A4 durch das Antriebsorgan 14 auf das Gesamtgestänge 15 und die daran festgelegten Dachteile 5,6 übertragen zu können.

Das Synchronisationsgestänge C umfaßt einen unteren Haupthebel C1 und einen oberen Haupthebel C2, die bei geschlossenem Dach 4 nahezu parallel zueinander liegen und beide über Ausleger der Verbindungsplatte 16 schwenkbar an den Lagerstellen CS1 und CS2 festgelegt sind.

Der untere Haupthebel C1 ist über einen Zug- und Schubhebel C3, der über die Lagerstelle CS 3 schwenkbar an einem Ausleger des dem unteren Viergelenk A zugeordneten Lenkers A3 gelagert ist, verbunden. Der Zughebel C3 greift über das Gelenk CS4 des Haupthebels C1, das zur anderen Anlenkung CS1 des Haupthebels C1 beabstandet ist, an diesem an. Durch Krafteinleitung über den Lenker C3 kann somit eine Verschwenkung des Haupthebels C1 um seine Anlenkung CS1 bewirkt werden.

An dem freien, der Anlenkung CS1 abgewandten Ende des Hauptlenkers C1 ist dieser über ein Schwenkgelenk CS5 mit einem weiteren Zug- und Schubhebel C4 verbunden, der seinerseits sich von dieser Anlenkung CS5 bis hin zu dem abgewinkelten Lenker B3 des oberen Viergelenks erstreckt und an diesem in dem Gelenk CS 6 angreift.

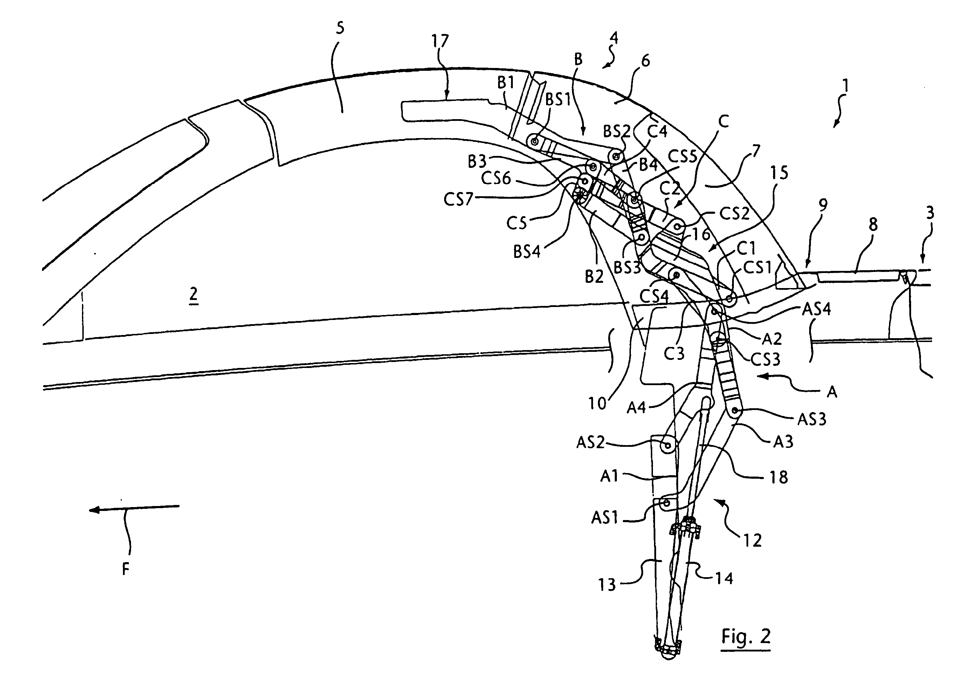

Der obere Hauptlenker C2 ist über ein Gelenk CS7 mit dem Lenker B2 des oberen Viergelenks B verbunden. Dieser Lenker B2 weist einen Langschenkel auf, der sich zwischen den Schwenkgelenken BS3 und BS4 erstreckt, wobei das Schwenkgelenk BS4 die Verbindung zwischen den Lenkern B2 und B3 herstellt. Weiterhin weist der Lenker B2 einen mit C5 bezeichneten Kurzschenkel auf, der das Schwenkgelenk BS4 mit dem die Lenker B2 und C2 verbindenden Schwenkgelenk CS7 verbindet. Das Schwenkgelenk CS7 liegt in der Darstellung nach Fig. 2 vor dem Lenker B3, ist jedoch nicht unmittelbar mit diesem verbunden, sondern die Verbindung wird über das Schwenkgelenk BS4 hergestellt. Durch den Zug- und Schubhebel C4 kann somit ein Drehmoment des abgewinkelten Trägers B3 um die Anlenkung BS4 bewirkt werden, so daß durch Krafteinwirkung des Zughebels C4 das obere Viergelenk B geöffnet oder geschlossen werden kann.

Mit den oberen und unteren Mehrgelenken B und A sowie dem dazwischen gesetzten Synchronisationsgestänge C ist insgesamt eine Vielgelenkkette 15 gebildet, deren Lenker alle miteinander lediglich schwenkgelenkig verbunden sind, ohne daß irgendwo eine Translationsbewegung, etwa in einer Führungskulisse, erforderlich wäre. Die Gesamtschwenkbewegung des Daches 4 wird allein durch das Gegeneinanderverschwenken der einzelnen in der Gelenkkette 15 enthaltenen Lenker bewirkt. Aufgrund der Vermittlung mittels des Synchronisationsgestänges C reicht hierfür ein einziger Antrieb 14 pro Fahrzeugseite aus. Es wäre auch möglich, einen zentralen Antrieb vorzusehen, der über etwa Umlenkgetriebe auf beide Fahrzeugseiten synchronisiert in der gleichen Weise einwirkt, wodurch dann insgesamt nur ein Antrieb von Nöten wäre, der jedoch durch seine Vermittlung in gleicher Weise synchron auf die beiden Fahrzeugseiten einwirken könnte.

Um das Dach 4 aus der geschlossenen Stellung zu öffnen, wird auf die Kolbenstange 18 des Antriebs 14 eine Zugkraft ausgeübt. Über ihre Anlenkung an dem Lenker A4 des unteren Viergelenks A wird diese Kraft auf dieses Viergelenk derart übertragen, daß der Lenker A4 in Richtung des Pfeils 19 um das Schwenkgelenk AS2 aufschwenkt. Dabei wird das untere Viergelenk A geöffnet, wodurch der Lenker A2, der mit dem hinteren Dachteil 6 über das Verbindungselement 16 fest verbunden ist, abwärts bewegt wird, wobei die Bewegung entsprechend dem nahezu ausgebildeten Gelenkparallelogramm A eine im wesentlichen vertikale Hubbewegung ist, lediglich von einem geringen Schwenkwinkel überlagert.

Über die Abwärtsbewegung des Lenkers A3 wird der an dem Gelenk CS3 mit diesem verbundene Zug- und Schubhebel C3 abwärts bewegt, wodurch das in Fahrtrichtung F vorgeordnete Ende des Haupthebels C1 des Synchronisationsgestänges C gegenüber dessen Lagerung an dem hinteren Verdeckteil 6 abwärts bewegt wird. Gleichzeitig mit der Abwärtsbewegung des hinteren Dachteils 6 wird dadurch auch eine Relativbewegung der Dachteile 5 und 6 zueinander vermittelt. Die Abwärtsschwenkbewegung des Haupthebels C1 wird über den Zughebel C4, der mit dem freien Ende CS5 des Haupthebels C1 verbunden ist, auf das Viergelenk B übertragen. Dabei wird der winkelförmige Hebel B3 um seine Lagerstelle BS4, mit der er an einem weiteren Lenker B2 des oberen Viergelenks B gehalten ist, aufgeschwenkt, wodurch das obere Viergelenk B insgesamt öffnet und das an diesem über die Verbindungsplatte 17 angehängte vordere Dachteil 5 gegenüber dem hinteren Dachteil 6 einwärts und abwärts verlagert wird.

Bei weiterem Einfahren der Kolbenstange 18 des Antriebsorgans 14 öffnet das untere Viergelenk A weiter, wodurch die Abwärtsverlagerung des hinteren Dachteils 6 über die Verbindungsplatte 16 zwischen dem Viergelenk A und dem hinteren Dachteil 6 so weit fortgeführt wird, bis dieses Dachteil 6 in einer nahezu vertikalen Stellung unterhalb einer Fensterbrüstungslinie 20 der Karosserie gelagert wird. Dabei wird über den Zughebel C3 der Haupthebel C1 des Synchronisationsgestänges C weiter abwärts verschwenkt, wodurch dieser den abgewinkelten Hebel B3 des oberen Viergelenks B über den Zughebel C4 weiter abwärts verschwenkt und somit dafür sorgt, daß eine Übersetzung zwischen dem Schwenkwinkel für das untere Dachteil 6 und dem für das obere Dachteil 5 stattfindet. Während die genannten Dachteile in geschlossener Stellung des Daches unter einem großen Winkel zueinander stehen, weil das vordere Dachteil 5 nahezu horizontal und das hintere Dachteil 6 nahezu vertikal steht, können somit die Dachteile 5, 6 in Ablagestellung in eine parallel voreinander liegende Vertikalstellung gebracht werden, da der vordere Hebel B3 um etwa 90° verschwenkt. Über seine Anlenkung an dem Lenker B1, der fest mit dem oberen Dachteil 5 verbunden ist, zieht er damit das obere Dachteil 5 in die Parallelstellung zu dem hinteren Dachteil 6.

Entsprechend umgekehrt ist der Bewegungsablauf beim Schließen des Daches 4. Die Zughebel C3 und C4 wirken dabei dann als Schubhebel auf die jeweiligen Viergelenke.

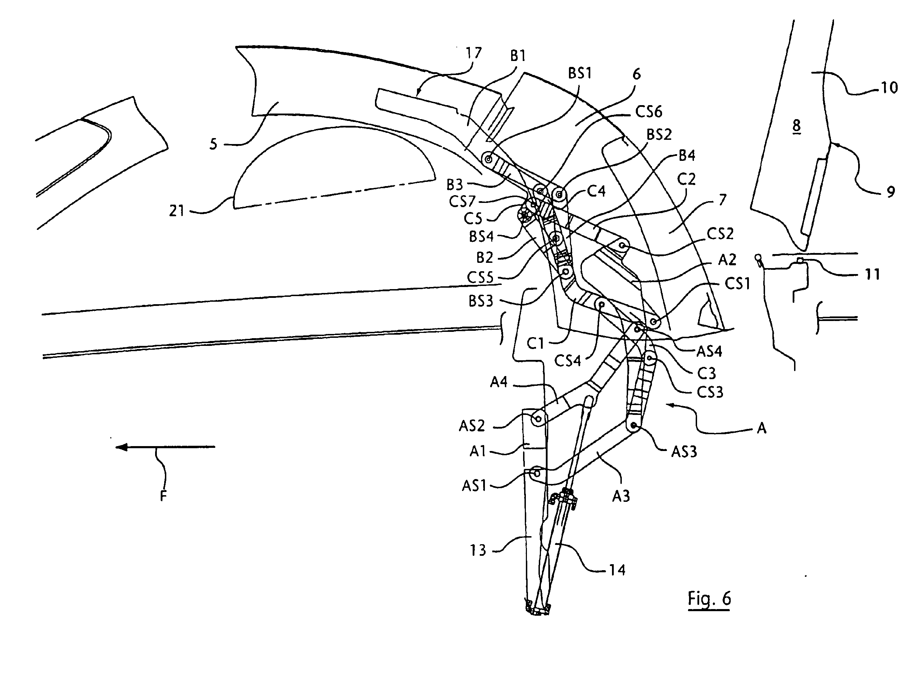

In Fig. 6 beispielsweise ist die Fahrerkopfpositionskontur 21 eines sogenannten 95 %-Mannes eingezeichnet. Daran wird deutlich, daß während der gesamten Dachöffnungs- oder Schließbewegung die volle Kopffreiheit für die Insassen erhalten bleibt. Es ist dennoch aufgrund der integrierten Bewegung der Dachteile 5, 6 gleichzeitig mit der Öffnungsbewegung des Gesamtdaches 4 nur eine geringe Außenhöhe während jeder Phase der Bewegung erforderlich. Das Dach 4 kann somit auch in flachen Räumen, etwa Garagen, geöffnet werden, ohne daß die Gefahr besteht, daß die vordere Dachkante an einer niedrigen Decke anschlagen würde. Dieses ist verursacht dadurch, daß gleichzeitig mit dem Absenken des hinteren Dachteils 6 auch die Verschachtelung der Dachteile 5 und 6 ineinander beginnt und somit keine einzelnen Phasen hintereinander ablaufen.

## Patentansprüche (Patentansprüche für folgende(n) Vertragsstaat(en): DE, FR, GB)

1. Cabriolet-Fahrzeug (1) mit einem zumindest zweiteiligen Dach (4), das ein hinteres (6) und ein in geschlossenem Zustand diesem vorgeordnetes Dachteil (5) umfaßt, wobei in geöffneter Stellung des Daches das hintere Dachteil (6) im wesentlichen aufrecht steht und das diesem vorgeordnete Dachteil (5) in Fahrtrichtung (F) vor und im wesentlichen parallel zu diesem gehalten ist,
**dadurch gekennzeichnet,**
**daß** das hintere (6) und das diesem vorgeordnete Dachteil (5) über jeweils einen gemeinsamen Antrieb (14) pro Fahrzeugseite zum öffnen oder Schließen des Daches beweglich sind und zur Bewirkung einer öffnungs- oder Schließbewegung des Daches (4) das hintere Dachteil (6) über eine Kette von schwenkgelenkig miteinander verbundenen Lenkern (A1;A2;A3;A4) in Wirkverbindung mit dem karosserieseitigen Antrieb (14) steht und das hintere Dachteil (6) während seiner Öffnungs- oder Schließbewegung im wesentlichen vertikal verfahren wird und gegenüber einer vertikalen, quer zum Cabriolet-Fahrzeug liegenden Ebene um einen Winkel von weniger als 30° geneigt wird und wobei das hintere Dachteil (6) über eine Kette von schwenkgelenkig miteinander verbundenen Lenkern (B1;B2;B3;B4;C1;C2;C3;C4;C5) in Wirkverbindung mit dem diesem vorgeordneten Dachteil (5) steht und die Gelenkkette zur Verbindung des hinteren Dachteils (6) mit dem Antrieb (14) und die zweite Gelenkkette zur Verbindung des diesem vorgeordneten Dachteils (5) mit dem hinteren Dachteil (6) als ein gemeinsames vielgelenk (15) ausgebildet sind, wobei das Vielgelenk ein oberes Mehrgelenk (B), das einernends an dem vorgeordneten Dachteil (5) angebunden ist, und ein unteres Mehrgelenk (A), das einenends an dem hinteren Dachteil (6) angebunden ist, umfaßt und wobei sich zwischen dem oberen (B) und dem unteren (A) Mehrgelenk ein Synchronisationsgestänge (C) befindet,
und wobei das obere Mehrgelenk (B) und das untere Mehrgelenk (A) jeweils alls Viergelenke ausgebildet sind, wovon das obere Viergelenk (B) ein Gelenkparallelogramm ausbildet, bei dem zwei Gelenkpunkte (BS1;BS2) dem vorgeordneten Dachteil (5) und zwei weitere Gelenkpunkte (BS3;BS4) dem Synchronisationsgestänge (C) zugeordnet sind.

2. Cabriolet-Fahrzeug (1) nach Anspruch 1,
**dadurch gekennzeichnet,**
**daß** das untere Viergelenk (A) ein Gelenkparallelogramm ausbildet, bei dem zwei im wesentlichen vertikal übereinanderliegende Gelenkpunkte (AS1; AS2) karosseriefest und zwei weitere, im wesentlichen ebenfalls übereinanderliegende Gelenkpunkte (AS3; AS4) an dem hinteren Dachteil, (6) angeordnet sind.

3. Cabriolet-Fahrzeug (1) nach einem der Ansprüche 1 oder 2.
**dadurch gekennzeichnet,**
**daß** zum Öffnen des Daches (4) das hintere (6) und das diesem vorgeordnete Dachteil (5) während der Öffnung des hinteren Dachteils (6) ineinander verschachtelbar sind.

4. Pickup-Fahrzeug (1), wobei das Pickup-Fahrzeug ein Cabriolet-Fahrzeug nach einem der Ansprüche 1 bis 3 ist, mit einer Fahrerkabine (2) und einem eine in Fahrtrichtung (F) vordere Begrenzungswand gegenüber der Fahrerkabine aufweisenden Laderaum (3),
**dadurch gekennzeichnet,**
**daß** die Fahrerkabine (2) ein mehrteiliges bewegliches Dach (4) aufweist, das in öffnungsstellung vor der vorderen Begrenzungswand des Laderaums (3) in einer im wesentlichen vertikalen oder nahezu vertikalen Stellung der die Dachaußenfläche bildenden Teile (5;6) ablegbar ist, wobei die Dachteile (5;6) über zumindest eine Gelenkkette (15) miteinander und mit einem Antriebsorgan (14) verbunden sind.

## Patentansprüche (Patentansprüche für folgende(n) Vertragsstaat(en): AT, BE, BG, CH, CY, CZ, DK, EE, ES, FI, GR, IE, IT, LI, LU, MC, NL, PT, SE, SK ,TR)

1. Cabriolet-Fahrzeug (1) mit einem zumindest zweiteiligen Dach (4), das ein hinteres (6) und ein in geschlossenem Zustand diesem vorgeordnetes Dachteil (5) umfaßt, wobei in geöffneter Stellung des Daches das hintere Dachteil (6) im wesentlichen aufrecht steht und das diesem vorgeordnete Dachteil (5) in Fahrtrichtung (F) vor und im wesentlichen parallel zu diesem gehalten ist,
**dadurch gekennzeichnet,**
**daß** das hintere (6) und das diesem vorgeordnete Dachteil (5) über jeweils einen gemeinsamen Antrieb (14) pro Fahrzeugseite zum Öffnen oder Schließen des Daches beweglich sind und zur Bewirkung einer Öffnungs- oder Schließbewegung des Daches (4) das hintere Dachteil (6) über eine Kette von schwenkgelenkig miteinander verbundenen Lenkern (A1;A2;A3;A4) in Wirkverbindung mit dem karosserieseitigen Antrieb (14) steht und das hintere Dachteil (6) während seiner Öffnungs- oder Schließbewegung im wesentlichen vertikal verfahren wird und gegenüber einer vertikalen, quer zum Cabriolet-Fahrzeug liegenden Ebene um einen Winkel von weniger als 30° geneigt wird.

2. Cabriolet-Fahrzeug (1) nach Anspruch 1,
**dadurch gekennzeichnet,**
**daß** das hintere Dachteil (6) über eine Kette von schwenkgelenkig miteinander verbundenen Lenkern (B1;B2;B3;B4;C1;C2;C3;C4;C5) in Wirkverbindung mit dem diesem vorgeordneten Dachteil (5) steht.

3. Cabriolet-Fahrzeug (1) nach einem der Ansprüche 1 oder 2,
**dadurch gekennzeichnet,**
**daß** die Gelenkkette zur Verbindung des hinteren Dachteils (6) mit dem Antrieb (14) und die zweite Gelenkkette zur Verbindung des diesem vorgeordneten Dachteils (5) mit dem hinteren Dachteil (6) als ein gemeinsames Vielgelenk (15) ausgebildet sind.

4. Cabriolet-Fahrzeug (1) nach Anspruch 3,
**dadurch gekennzeichnet,**
**daß** das Vielgelenk ein oberes Mehrgelenk (B), das einenends an dem vorgeordneten Dachteil (5) angebunden ist, und ein unteres Mehrgelenk (A), das einenends an dem hinteren Dachteil (6) angebunden ist, umfaßt.

5. Cabriolet-Fahrzeug (1) nach Anspruch 4,
**dadurch gekennzeichnet,**
**daß** sich zwischen dem oberen (B) und dem unteren (A) Mehrgelenk ein Synchronisationsgestänge (C) befindet.

6. Cabriolet-Fahrzeug (1) nach einem der Ansprüche 4 oder 5,
**dadurch gekennzeichnet,**
**daß** das obere Mehrgelenk (B) und das untere Mehrgelenk (A) jeweils als Viergelenke ausgebildet sind.

7. Cabriolet-Fahrzeug (1) nach Anspruch 6,
**dadurch gekennzeichnet,**
**daß** das untere Viergelenk (A) ein Gelenkparallelogramm ausbildet, bei dem zwei im wesentlichen vertikal übereinanderliegende Gelenkpunkte (AS1; AS2) karosseriefest und zwei weitere, im wesentlichen ebenfalls übereinanderliegende Gelenkpunkte (AS3; AS4) an dem hinteren Dachteil (6) angeordnet sind.

8. Cabriolet-Fahrzeug (1) nach einem der Ansprüche 6 oder 7,
**dadurch gekennzeichnet,**
**daß** das obere Viergelenk (B) ein Gelenkparallelogramm ausbildet, bei dem zwei Gelenkpunkte (BS1;BS2) dem vorgeordneten Dachteil (5) und zwei weitere Gelenkpunkte(BS3;BS4) dem Synchronisationsgestänge (C) zugeordnet sind.

9. Cabriolet-Fahrzeug (1) nach einem der Ansprüche 1 bis 8,
**dadurch gekennzeichnet,**
**daß** zum Öffnen des Daches (4) das hintere (6) und das diesem vorgeordnete Dachteil (5) während der Öffnung des hinteren Dachteils (6) ineinander verschachtelbar sind.

10. Pickup-Fahrzeug (1), wobei das Pickup-Fahrzeug ein Cabriolet-Fahrzeug nach einem der Ansprüche 1 bis 9 ist, mit einer Fahrerkabine (2) und einem eine in Fahrtrichtung (F) vordere Begrenzungswand gegenüber der Fahrerkabine aufweisenden Laderaum (3),
**dadurch gekennzeichnet,**
**daß** die Fahrerkabine (2) ein mehrteiliges bewegliches Dach (4) aufweist, das in Öffnungsstellung vor der vorderen Begrenzungswand des Laderaums (3) in einer im wesentlichen vertikalen oder nahezu vertikalen Stellung der die Dachaußenfläche bildenden Teile (5;6) ablegbar ist, wobei die Dachteile (5;6) über zumindest eine Gelenkkette (15) miteinander und mit einem Antriebsorgan (14) verbunden sind.

## Claims (Claims for the following Contracting State(s): DE, FR, GB)

1. A convertible vehicle (1) with an at least two-part roof (4) which comprises a rear roof part (6) and a roof part (5) which is arranged in front of said rear roof part (6) in the closed state, wherein, when the roof is opened, said rear roof part (6) is substantially upright and said roof part (5) arranged in front of it is held in front of said rear roof part (6) in the direction of travel (F) and substantially parallel to the rear roof part (6),
**characterised in that**
the rear roof part (6) and the roof part (5) arranged in front of it are each movable by one common drive (14) per vehicle side for opening or closing the roof and, in order to effect an opening or closing movement of the roof (4), the rear roof part (6) is operatively connected to the vehicle body-side drive (14) via a chain of mutually articulated links (A1;A2;A3;A4) and the rear roof part (6) is displaced, during its opening or closing movement, substantially vertically and is inclined at an angle of less than 30° with respect to a vertical plane which extends in the transverse direction of the convertible vehicle, and wherein the rear roof part (6) is operatively connected, via a chain of mutually articulated links (B1;B2;B3;B4;C1;C2;C3;C4;CS) to the roof part (5) arranged in front of it, and said link chain for connecting the rear roof part (6) to the drive (14) and said second link chain for connecting the front roof part (5) to the rear roof part (6) are provided as one common multi-bar linkage (15), said multi-bar linkage comprising an upper multiple joint (B), which is linked at one end to the front roof part (5), and a lower multiple joint (A), which is linked at one end to the rear roof part (6), and a synchronisation linkage (C) being arranged between the upper (B) and lower (A) multiple joints, and wherein the upper multiple joint (B) and the lower multiple joint (A) are each provided as four-bar linkages, of which the upper four-bar linkage (B) forms an articulated parallelogram, wherein two points of articulation (BS1; BS2) are assigned to the front roof part (5) and two further points of articulation (BS3; BS4) are assigned to the synchronisation linkage (C).

2. The convertible vehicle (1) according to claim 1, **characterised in that** the lower four-bar linkage (A) forms an articulated parallelogram wherein two points of articulation (AS1; AS2), located substantially vertically above one another, are fixed to the vehicle body and two further points of articulation (AS3; AS4), also located substantially above each other, are arranged on the rear roof part (6).

3. The convertible vehicle (1) according to any one of claims 1 or 2, **characterised in that**, in order to open the roof (4), the rear roof part (6) and the roof part (5) arranged in front of it can be nested into each other during the opening of the rear roof part (6).

4. A pickup vehicle (1), said pickup vehicle being a convertible vehicle according to any one of claims 1 to 3, with a cab (2) and a cargo bay (3) comprising a partition wall which, when viewed in the direction of travel (F), is located at the front and separates the cargo bay (3) from the cab, **characterised in that** the cab (2) comprises a multi-part, movable roof (4) which, in the open position, can be stowed in front of the front partition wall of the cargo bay (3) in a substantially vertical or near-vertical position of the parts (5; 6) forming the outer roof surface, said roof parts (5; 6) being connected to each other and to a drive element (14) by at least one link chain (15).

## Claims (Claims for the following Contracting State(s): AT, BE, BG, CH, CY, CZ, DK, EE, ES, FI, GR, IE, IT, LI, LU, MC, NL, PT, SE, SK, TR)

1. A convertible vehicle (1) with an at least two-part roof (4) which comprises a rear roof part (6) and a roof part (5) which is arranged in front of said rear roof part (6) in the closed state, wherein, when the roof is opened, said rear roof part (6) is substantially upright and said roof part (5) arranged in front of it is held in front of said rear roof part (6) in the direction of travel (F) and substantially parallel to the rear roof part (6),
**characterised in that**
the rear roof part (6) and the roof part (5) arranged in front of it are each movable by one common drive (14) per vehicle side for opening or closing the roof and, in order to effect an opening or closing movement of the roof (4), the rear roof part (6) is operatively connected to the vehicle body-side drive (14) via a chain of mutually articulated links (A1;A2;A3;A4) and the rear roof part (6) is displaced, during its opening or closing movement, substantially vertically and is inclined at an angle of less than 30° with respect to a vertical plane which extends in the transverse direction of the convertible vehicle.

2. The convertible vehicle (1) according to claim 1, **characterised in that** the rear roof part (6) is operatively connected, via a chain of mutually articulated links (B1;B2;B3;B4;C1;C2;C3;C4;CS) to the roof part (5) arranged in front of it.

3. The convertible vehicle (1) according to any one of claims 1 or 2, **characterised in that** said link chain for connecting the rear roof part (6) to the drive (14) and said second link chain for connecting the front roof part (5) to the rear roof part (6) are provided as one common multi-bar linkage (15).

4. The convertible vehicle (1) according to claim 3, **characterised in that** said multi-bar linkage comprises an upper multiple joint (B), which is linked at one end to the front roof part (5), and a lower multiple joint (A), which is linked at one end to the rear roof part (6).

5. The convertible vehicle (1) according to claim 4, **characterised in that** a synchronisation linkage (C) is arranged between the upper (B) and lower (A) multiple joints.

6. The convertible vehicle (1) according to any one of claims 4 or 5, **characterised in that** the upper multiple joint (B) and the lower multiple joint (A) are each provided as four-bar linkages.

7. The convertible vehicle (1) according to claim 6, **characterised in that** the lower four-bar linkage (A) forms an articulated parallelogram wherein two points of articulation (AS1; AS2), located substantially vertically above one another, are fixed to the vehicle body and two further points of articulation (AS3; AS4), also located substantially above each other, are arranged on the rear roof part (6).

8. The convertible vehicle (1) according to any one of claims 6 or 7, **characterised in that** the upper four-bar linkage (B) forms an articulated parallelogram, wherein two points of articulation (BS1; BS2) are assigned to the front roof part (5) and two further points of articulation (BS3; BS4) are assigned to the synchronisation linkage (C).

9. The convertible vehicle (1) according to any one of claims 1 to 8, **characterised in that**, in order to open the roof (4), the rear roof part (6) and the roof part (5) arranged in front of it can be nested into each other during the opening of the rear roof part (6).

10. A pickup vehicle (1), said pickup vehicle being a convertible vehicle according to any one of claims 1 to 9, with a cab (2) and a cargo bay (3) comprising a partition wall which, when viewed in the direction of travel (F), is located at the front and separates the cargo bay (3) from the cab, **characterised in that** the cab (2) comprises a multi-part, movable roof (4) which, in the open position, can be stowed in front of the front partition wall of the cargo bay (3) in a substantially vertical or near-vertical position of the parts (5; 6) forming the outer roof surface, said roof parts (5; 6) being connected to each other and to a drive element (14) by at least one link chain (15).

## Revendications (Revendications pour l'(les) Etat(s) contractant(s) suivant(s): DE, FR, GB)

1. Véhicule cabriolet (1) avec un toit (4) en au moins deux parties qui comprend un élément de toit arrière (6) et un élément de toit (5) disposé en avant dudit élément de toit arrière (6) en état fermée et, lorsque le toit est ouvert, ledit élément de toit arrière (6) est sensiblement debout et ledit élément de toit (5) disposé en avant de celui-ci est tenu en avant dudit élément de toit arrière (6) dans la direction de marche (F) et sensiblement parallèle audit élément de toit arrière (6),
**caractérisé en ce que**
l'élément de toit arrière (6) et l'élément de toit (5) disposé en avant de celui-ci sont déplaçables par un entraînement joint (14) respectif de chaque côté du véhicule pour ouvrir ou fermer le toit et, afin d'effectuer un mouvement d'ouverture ou de fermeture du toit (4), l'élément de toit arrière (6) est mis en liaison active avec l'entraînement (14) du côté de la carrosserie par une chaîne de bras articulés (A1;A2;A3;A4) et l'élément de toit arrière (6) est déplacé, pendant son mouvement d'ouverture ou de fermeture, de manière sensiblement verticale et incliné sous un angle de moins de 30° par rapport à un plan vertical qui s'étend dans la direction transversale du véhicule cabriolet, l'élément de toit arrière (6) étant mis en liaison active, au moyen d'une chaîne de bras articulés (B1;B2;B3;B4;C1;C2;C3;C4;CS), avec l'élément de toit (5) disposé en avant dudit élément de toit arrière (6), et la chaîne d'articulations destinée à relier l'élément de toit arrière (6) avec l'entraînement (14) et la deuxième chaîne d'articulations destinée à relier l'élément de toit avant (5) avec l'élément de toit arrière (6) sont réalisées sous forme d'un seule ensemble à plusieurs articulations (15), ledit ensemble à plusieurs articulations comprenant un ensemble multi-articulé supérieur (B), dont une extrémité est reliée avec l'élément de toit avant (5), et un ensemble multi-articulé inférieur (A), dont une extrémité est reliée avec l'élément de toit arrière (6), et une tringlerie de synchronisation (C) étant disposée entre ledit ensemble multi-articulé supérieur (B) et ledit ensemble multi-articulé inférieur (A), l'ensemble multi-articulé supérieur (B) et l'ensemble multi-articulé inférieur (A) étant chacun réalisé en tant qu'ensembles à quatre articulations, dont l'ensemble à quatre articulations supérieur (B) constitue un parallélogramme articulé, dans lequel deux points d'articulation (BS1; BS2) sont associés audit élément de toit avant (5) et deux autres points d'articulation (BS3; BS4) sont associés à la tringlerie de synchronisation (C).

2. Véhicule cabriolet (1) selon la revendication 1, **caractérisé en ce que** l'ensemble à quatre articulations inférieur (A) constitue un parallélogramme articulé dans lequel deux points d'articulation (AS1; AS2), disposés sensiblement verticalement l'un au-dessus de l'autre, sont fixes par rapport à la carrosserie et deux autres points d'articulation (AS3; AS4), également disposés sensiblement l'un au-dessus de l'autre, sont disposés sur l'élément de toit arrière (6).

3. Véhicule cabriolet (1) selon l'une quelconque des revendications 1 ou 2, **caractérisé en ce que**, pour ouvrir le toit (4), l'élément de toit arrière (6) et l'élément de toit (5) disposé en avant de celui-ci peuvent être imbriqués l'un dans l'autre pendant l'ouverture de l'élément de toit arrière (6).

4. Véhicule pick-up (1), ce véhicule pick-up étant un véhicule cabriolet selon l'une quelconque des revendications 1 à 3 qui comprend un habitacle (2) et un espace de chargement (3) présentant une paroi de limitation avant, vue dans la direction de marche (F), qui sépare l'espace de chargement (6) de l'habitacle,
**caractérisé en ce que** l'habitacle (2) comprend un toit déplaçable (4) en plusieurs parties qui, en position ouverte, est déposable en avant de la paroi de limitation avant de l'espace de chargement (3) dans une position sensiblement verticale ou presque verticale des éléments (5; 6) constituant la face extérieure dudit toit, lesdits éléments de toit (5; 6) étant reliés l'un avec l'autre et avec un élément d'entraînement (14) par au moins une chaîne d'articulations (15).

## Revendications (Revendications pour l'(les) Etat(s) contractant(s) suivant(s): AT, BE, BG, CH, CY, CZ, DK, EE, ES, FI, GR, IE, IT, LI, LU, MC, NL, PT, SE, SK, TR)

1. Véhicule cabriolet (1) avec un toit (4) en au moins deux parties qui comprend un élément de toit arrière (6) et un élément de toit (5) disposé en avant dudit élément de toit arrière (6) en état fermée et, lorsque le toit est ouvert, ledit élément de toit arrière (6) est sensiblement debout et ledit élément de toit (5) disposé en avant de celui-ci est tenu en avant dudit élément de toit arrière (6) dans la direction de marche (F) et sensiblement parallèle audit élément de toit arrière (6),
**caractérisé en ce que**
l'élément de toit arrière (6) et l'élément de toit (5) disposé en avant de celui-ci sont déplaçables par un entraînement joint (14) respectif de chaque côté du véhicule pour ouvrir ou fermer le toit et, afin d'effectuer un mouvement d'ouverture ou de fermeture du toit (4), l'élément de toit arrière (6) est mis en liaison active avec l'entraînement (14) du côté de la carrosserie par une chaîne de bras articulés (A1;A2;A3;A4) et l'élément de toit arrière (6) est déplacé, pendant son mouvement d'ouverture ou de fermeture, de manière sensiblement verticale et incliné sous un angle de moins de 30° par rapport à un plan vertical qui s'étend dans la direction transversale du véhicule cabriolet.

2. Véhicule cabriolet (1) selon la revendication 1, **caractérisé en ce que** l'élément de toit arrière (6) est mis en liaison active, au moyen d'une chaîne de bras articulés (B1;B2;B3;B4;C1;C2;C3;C4;CS), avec l'élément de toit (5) disposé en avant dudit élément de toit arrière (6).

3. Véhicule cabriolet (1) selon l'une quelconque des revendications 1 ou 2, **caractérisé en ce que** la chaîne d'articulations destinée à relier l'élément de toit arrière (6) avec l'entraînement (14) et la deuxième chaîne d'articulations destinée à relier l'élément de toit avant (5) avec l'élément de toit arrière (6) sont réalisées sous forme d'un seule ensemble à plusieurs articulations (15).

4. Véhicule cabriolet (1) selon la revendication 2, **caractérisé en ce que** ledit ensemble à plusieurs articulations comprend un ensemble multi-articulé supérieur (B), dont une extrémité est reliée avec l'élément de toit avant (5), et un ensemble multi-articulé inférieur (A), dont une extrémité est reliée avec l'élément de toit arrière (6).

5. Véhicule cabriolet (1) selon la revendication 4, **caractérisé en ce qu'**une tringlerie de synchronisation (C) est disposée entre ledit ensemble multi-articulé supérieur (B) et ledit ensemble multi-articulé inférieur (A).

6. Véhicule cabriolet (1) selon l'une quelconque des revendications 4 ou 5, **caractérisé en ce que** l'ensemble multi-articulé supérieur (B) et l'ensemble multi-articulé inférieur (A) sont chacun réalisé en tant qu'ensembles à quatre articulations.

7. Véhicule cabriolet (1) selon la revendication 6, **caractérisé en ce que** l'ensemble à quatre articulations inférieur (A) constitue un parallélogramme articulé dans lequel deux points d'articulation (AS1; AS2), disposés sensiblement verticalement l'un au-dessus de l'autre, sont fixes par rapport à la carrosserie et deux autres points d'articulation (AS3; AS4), également disposés sensiblement l'un au-dessus de l'autre, sont disposés sur l'élément de toit arrière (6).

8. Véhicule cabriolet (1) selon l'une quelconque des revendications 6 ou 7, **caractérisé en ce que** l'ensemble à quatre articulations supérieur (B) constitue un parallélogramme articulé, dans lequel deux points d'articulation (BS1; BS2) sont associés audit élément de toit avant (5) et deux autres points d'articulation (BS3; BS4) sont associés à la tringlerie de synchronisation (C).

9. Véhicule cabriolet (1) selon l'une quelconque des revendications 1 à 8, **caractérisé en ce que**, pour ouvrir le toit (4), l'élément de toit arrière (6) et l'élément de toit (5) disposé en avant de celui-ci peuvent être imbriqués l'un dans l'autre pendant l'ouverture de l'élément de toit arrière (6).

10. Véhicule pick-up (1), ce véhicule pick-up étant un véhicule cabriolet selon l'une quelconque des revendications 1 à 9 qui comprend un habitacle (2) et un espace de chargement (3) présentant une paroi de limitation avant, vue dans la direction de marche (F), qui sépare l'espace de chargement (6) de l'habitacle,
**caractérisé en ce que** l'habitacle (2) comprend un toit déplaçable (4) en plusieurs parties qui, en position ouverte, est déposable en avant de la paroi de limitation avant de l'espace de chargement (3) dans une position sensiblement verticale ou presque verticale des éléments (5; 6) constituant la face extérieure dudit toit, lesdits éléments de toit (5; 6) étant reliés l'un avec l'autre et avec un élément d'entraînement (14) par au moins une chaîne d'articulations (15).
